# EUROPEAN PATENT SPECIFICATION

(11) **EP 1 292 051 B1**
(45) Date of publication and mention of the grant of the patent: **12.11.2008**
(21) Application number: 02020457.4
(22) Date of filing: 11.09.2002
(51) Int. Cl.: H04B 7/26

(54) **Apparatus and method of compensation for signal time-of-arrival variation in a UMTS handset**
Gerät und Verfahren zur Kompensation der Signalankunftszeitvariation in einem UMTS-Handy
Appareil et procédé pour compenser la variation des instants d'arrivée des signals dans un combiné UMTS

(30) Priority: 11.09.2001 GB 0121987
(43) Date of publication of application: 12.03.2003
(73) Proprietor: NEC CORPORATION, Tokyo (JP)
(72) Inventor: Wheeler, Ashley, NEC Technologies (UK) Ltd., Reading, Berkshire RG2 0TD (GB)
(74) Representative: von Samson-Himmelstjerna, Friedrich

(56) References cited:
- DE-C- 19 525 426
- GB-A- 2 318 026
- US-A- 5 654 960

## Description

This invention relates to a dual mode mobile telephone handset which operates on both the GSM and UMTS networks.

Dual mode mobile telephones of this type have to take regular synchronisation measurements with both the GSM and UMTS networks. When a phone is not in a call this is not a problem as there is plenty of time available to perform all the required measurements. Similarly, when the phone is in a call on the UMTS network, there are commands available which cause transmission gaps thereby freeing up time for synchronisation with the GSM network.

However, when the phone is in a call on the GSM network, measurement on the UMTS network can only be performed in idle periods which are one GSM frame in length and approximately one hundred and twenty milliseconds apart. Certain UMTS measurements take longer than one hundred and twenty milliseconds to perform and therefore have to be split over more than one idle frame. Therefore, to complete successfully such a measurement the handset has to keep track of the UMTS frame timing (as established in the first GSM idle frame) until the next GSM idle frame when the UMTS measurement can be continued or completed.

The accuracy required in this time base depends on the window size of the UMTS decoder. As window size relates directly to processing power required and hence to cost the power consumption of the decoder, the window size needs to be kept as small as possible. Unfortunately the only clock available to time the UMTS operations is the GSM one, and this can vary significantly in relation to the time base of the UMTS system. In addition, the time of arrival of UMTS signals can vary as the handset moves towards or away from the UMTS base station. Thus the size of the time base and time of arrival variations and hence the required window size depend on three factors:
1. The difference between the UMTS and GSM network clocks at the respective base stations.
2. Errors in the GSM clock caused by Doppler shift in the received GSM signal frequency (due to motion of the handset relative to the GSM base station), as the GSM clock will track at the received frequency, rather than the transmitted frequency of the GSM signals.
3. The varying timing delay experienced by the UMTS signals arriving at the handset due to motion of the handset relative to the UMTS base station.

Nothing can be done about point 1 within the handset. Point 2 can be compensated for using predictive techniques based upon the timing advanced (TA) mechanism provided in the GSM network. This can be addressed in our United Kingdom patent application GB-A-2374765.

US 5,654,960 discloses a GSM mobile radio station in which the reference clock signal generator is controlled with an adjustment signal which is a function of a derivate and a mean value of determined time delays between received time slot positions and expected time slot positions. The mean value is determined by an integrator which smoothes the determined time slot delays.

DE 195 25 426 discloses a DECT receiving unit which determines an error signal indicating the offset of an actual synchronisation signal from a reference synchronisation signal wherein the latter one is determined by means of synchronisation data within the received data. The error signals are counted and stored during a predetermined time of duration. A correction signal is derived from the number of stored correction signal and will be used for synchronisation during an interruption of the data reception.

GB-A-2 318 026 monitors variations in the offset between the start of a specified time slot, allocated to a mobile station, and the receipt of a signal burst from that mobile station and derives an average related to the distribution of the burst about the center of the time slot. This operation is repeated for other mobile stations linked to the base station and the mobile stations are then grouped according to the ranges into which their averages lie. A common carrier signal is assigned to the mobile stations within the group, so that the base station can communicate with the mobile stations on a group basis, thereby enabling guard times to be reduced for mobiles of a similar distance from the base station.

The object of the invention is to provide a method and an apparatus for compensating for the varying time delay effect in UMTS as mentioned above under point 3.

The invention achieves this object with the subject-matter of independent claims 1 and 2. By minimising this source of UMTS timing error, particularly when combined with compensation for a point 2, brings the required window size in the UMTS decoder down to plus or minus one sample and therefore reduces the required processing power by about 40%.

A preferred embodiment of the invention will now be described in detail by way of example as reference to the accompanying figures, in which
Fig. 1 is a block diagram of an existing burst mode received process; and
Figure 2 is a block diagram of a burst mode receive process embodying the invention.

The time taken by a signal to travel from a UMTS base station to a handset can be simply calculated, based on the speed of the signal and the distance it must travel. If the handset is in motion along the axis between receiver and transmitter then the absolute delay experienced by the signal from the time it is transmitted to the time it is received will vary in proportion to the distance travelled and the direction of the motion along the axis whilst the signal is travelling from the base station to the handset.

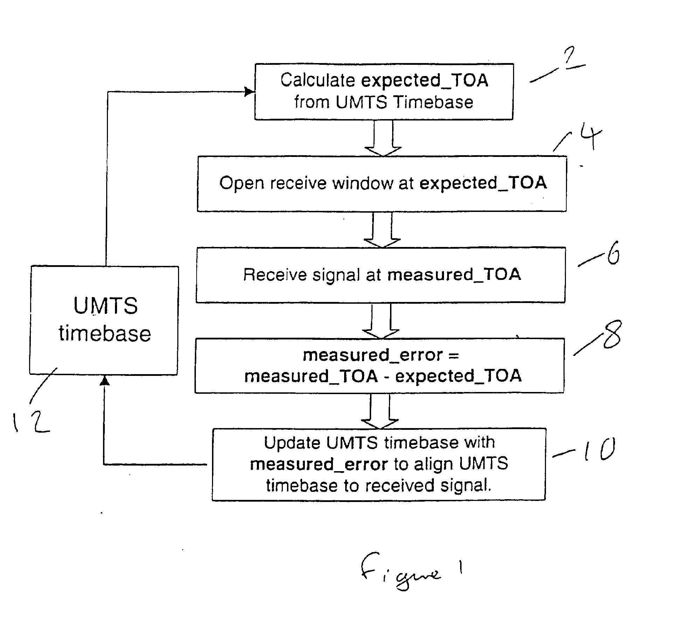

In the existing first mode receive process as shown in figure 1 the handset uses the GSM clock to determine when it expects the UMTS signal to arrive. This is done at step 2 and a receive window is open at the expected time of arrival at step 4. The actual time of arrival of the signal is measured at box 6 and the error between the measured time of arrival and expected time of arrival is derived at step 8. An update for the UMTS time base is derived from the measured error at step 10 and applied to the UMTS time base at step 12. This time base is then used to calculate the expected time of arrival of the next UMTS signal at 2.

In this embodiment, the handset uses the GSM clock to determine when it expects the UMTS signal to arrive and opens a receive window accordingly. By measuring the difference between the expected time of arrival and the actual time of arrival of a signal, a measure of the combined effects of GSM clock time base error and any change in UMTS signal delay will be captured. If the effects of the GSM time base error (point 2 above) are minimised using the techniques described in UK patent application GB-A-2374765, the resulting difference will be reduced and should then be predominantly a measure of the change in signal propagation delay due to motion of the handset since the last signal was received. The method set out in UK patent application GB-A-2374765 corrects the Doppler Shift in GSM signals with a mobile handset by using timing advance signal to determine the rate of change of motion of the handset in relation to the base station. Timing advance is a rough measure of the distance between the handset and the base station having a resolution of approximately 55 metres. Changes in timing advance data are detected and after a predetermined interval of time, the timing advance data is examined again to see if it has changed. If it has, then a correction for the UMTS signal is derived.

A preferred embodiment of the invention compensates for the measured timing difference which is now predominantly due to the change in signal propagation delay by measuring the timing difference and storing and comparing this with a number of previously recorded values to determine the current average rate of change of delay. This average rate of change of delay can then be used to determine the next expected time of arrival to thereby minimise the difference between expected and actual signal time of arrival caused by predictable changes in signal propagation delay. In this way, information on previous changes to UMTS signal propagation delay are used to predict future variations and thus to reduce the required window size.

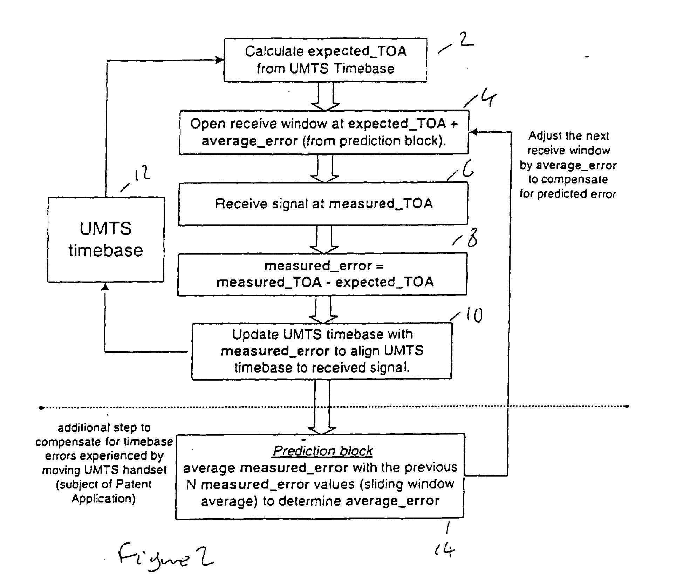

The system of figure 2 shows what happens at a handset embodying the invention. This is similar to figure 1, except that there is a prediction block 14 provided which takes a sliding window average of the measured errors derived in step 8 to determine an average error in the difference between measured time of arrival and expected time of arrival. A predetermined maximum number of samples is used and this number can be varied as desired. Usually it will be set within the handset. This average error is then used at step 4 as a correction to the expected time of arrival. Thus, for example, with a handset which is moving at a steady speed, the average error will be relatively constant and this should give good correction. Even for handsets which are not moving at steady speed, some benefit will be derived from correction by the average error.

In particular, by tracking the average time base error it is possible to provide a predicted correction for time base error, thereby reducing the actual time base error encountered. In a moving car on e.g. a motorway travelling at constant speed this should essentially eliminate time base error. With more sporadic movement the correction will be less useful but the system can be set up to adapt to underlying trends in time base error.

## Claims

1. A method for correcting for time base error in an UMTS mode of operation in a dual mode mobile telephone, operating on both the GSM and UMTS networks, comprising the steps of:
measuring a time of arrival of an UMTS signal,
comparing the time of arrival of the UMTS signal with an expected time of arrival to derive a time base error signal,
correcting an UMTS time base for time base error,
deriving an average time base error value over a predetermined period of time, by averaging the time base error with a predetermined maximum number of previously measured time base errors,
applying a predicted time base error based on the derived average time base error to the expected time of arrival to reduce the magnitude of the derived time base error.

2. Apparatus for correcting for time base error in an UMTS mode of operation in a dual mode mobile telephone, operating on both the GSM and UMTS networks, comprising means for measuring a time of arrival of a signal, means for deriving a time base error from the measured time of arrival and an expected time of arrival of the signal, means for correcting an UMTS time base with the time base error, means for deriving an average time base error over a predetermined period of time, by averaging the time base error with a predetermined maximum number of previously measured time base errors, means for applying a predicted correction based on the derived average time base error to the expected time of arrival to reduce the magnitude of the time base error.

## Patentansprüche

1. Verfahren zum Korrigieren eines Zeitbasisfehlers in einem UMTS-Betriebsmodus in einem Dualmode-Mobiltelefon, das sowohl im GSM- als auch UMTS-Netz arbeitet, welches die folgenden Schritte umfasst:
Messen einer Ankunftszeit eines UMTS-Signals;
Vergleichen der Ankunftszeit des UMTS-Signals mit einer erwarteten Ankunftszeit, um ein Zeitbasis-Fehlersignal abzuleiten;
Korrigieren einer UMTS-Zeitbasis für den Zeitbasisfehler;
Ableiten eines mittleren Zeitbasis-Fehlerwerts über eine vorbestimmte Zeitdauer durch Mitteln des Zeitbasisfehlers mit einer vorbestimmten maximalen Anzahl zuvor gemessener Zeitbasisfehler,
Anwenden eines vorhergesagten Zeitbasisfehlers, basierend auf dem abgeleiteten mittleren Zeitbasisfehler, für die erwartete Ankunftszeit, um die Größe des abgeleiteten Zeitbasisfehlers zu verringern.

2. Vorrichtung zum Korrigieren eines Zeitbasisfehlers in einem UMTS-Betriebsmodus in einem Dualmode-Mobiltelefon, das sowohl im GSM- als auch UMTS-Netz arbeitet, die folgendes umfasst: Mittel zum Messen einer Ankunftszeit eines Signals, Mittel zum Ableiten eines Zeitbasisfehlers aus der gemessenen Ankunftszeit und einer erwarteten Ankunftszeit des Signals, Mittel zum Korrigieren einer UMTS-Zeitbasis mit dem Zeitbasisfehler, Mittel zum Ableiten eines mittleren Zeitbasisfehlers über eine vorbestimmte Zeitdauer, durch Mitteln des Zeitbasisfehlers mit einer vorbestimmten maximalen Anzahl zuvor gemessener Zeitbasisfehler, Mittel zum Anwenden einer vorhergesagten Korrektur, basierend auf dem abgeleiteten mittleren Zeitbasisfehler, für die erwartete Ankunftszeit, um die Größe des Zeitbasisfehlers zu verringern.

## Revendications

1. Procédé pour corriger une erreur de base de temps dans un mode de fonctionnement UMTS dans un téléphone mobile à double mode, fonctionnant à la fois sur les réseaux GSM et UMTS, comprenant les étapes consistant à :
mesurer un instant d'arrivée d'un signal UMTS,
comparer l'instant d'arrivée du signal UMTS à un instant d'arrivée prévu pour dériver un signal d'erreur de base de temps,
corriger une base de temps UMTS pour une erreur de base de temps,
dériver une valeur moyenne d'erreur de base de temps sur une période de temps prédéterminée, en moyennant l'erreur de base de temps avec un nombre maximum prédéterminé d'erreurs de base de temps précédemment mesurées,
appliquer une erreur de base de temps prédite, basée sur l'erreur de base de temps moyenne dérivée, à l'instant d'arrivée prévu pour réduire l'importance de l'erreur de base de temps dérivée.

2. Appareil pour corriger une erreur de base de temps dans un mode de fonctionnement UMTS dans un téléphone mobile à double mode, fonctionnant à la fois sur les réseaux GSM et UMTS, comprenant des moyens pour mesurer un instant d'arrivée d'un signal, des moyens pour dériver une erreur de base de temps à partir de l'instant d'arrivée mesuré et d'un instant d'arrivée prévu du signal, des moyens pour corriger une base de temps UMTS avec l'erreur de base de temps, des moyens pour dériver une erreur de base de temps moyenne sur une période de temps prédéterminée, en moyennant l'erreur de base de temps avec un nombre maximum prédéterminé d'erreurs de base de temps précédemment mesurées, des moyens pour appliquer une correction prédite, basée sur l'erreur de base de temps moyenne dérivée, à l'instant d'arrivée prévu pour réduire l'importance de l'erreur de base de temps.
